# EUROPÄISCHE PATENTSCHRIFT

(11) **EP 3 625 097 B1**
(45) Veröffentlichungstag und Bekanntmachung des Hinweises auf die Patenterteilung: **03.01.2024**
(21) Anmeldenummer: 18721990.2
(22) Anmeldetag: 25.04.2018
(51) Int. Cl.: B60W 50/08

(54) **FAHRSYSTEM MIT VERSCHIEDENEN FAHRFUNKTIONEN ZUM AUTOMATISIERTEN FAHREN UND EINER GEMEINSAMEN EINGABEKOMPONENTE SOWIE VERFAHREN ZUM AKTIVIEREN EINER FAHRFUNKTION ÜBER DIE GEMEINSAME EINGABEKOMPONENTE**
DRIVING SYSTEM WITH DIFFERENT DRIVING FUNCTIONS FOR AN AUTOMATED DRIVE AND A COMMON INPUT COMPONENT, AND METHOD FOR ACTIVATING A DRIVING FUNCTION VIA THE COMMON INPUT COMPONENT
SYSTÈME DE CONDUITE COMPRENANT DIFFÉRENTES FONCTIONS DE CONDUITE SERVANT À LA CONDUITE AUTOMATISÉE ET UN COMPOSANT DE SAISIE COMMUN AINSI QUE PROCÉDÉ D'ACTIVATION D'UNE FONCTION DE CONDUITE PAR LE BIAIS DU COMPOSANT DE SAISIE COMMUN

(30) Priorität: 19.05.2017 DE 102017208506
(43) Veröffentlichungstag der Anmeldung: 25.03.2020
(73) Patentinhaber: Bayerische Motoren Werke Aktiengesellschaft, 80809 München (DE)
(72) Erfinder: KÜNZNER, Hermann, 85356 Freising (DE)
(86) Internationale Anmeldenummer: PCT/EP2018/060623
(87) Internationale Veröffentlichungsnummer: WO 2018/210539

(56) Entgegenhaltungen:
- WO-A1-2016/109765
- DE-A1-102009 033 752
- DE-A1-102012 101 686
- DE-A1-102014 014 118

## Beschreibung

Die Erfindung betrifft ein Fahrsystem mit einer Mehrzahl verschiedener Fahrfunktionen mit unterschiedlichem Automatisierungsgrad für ein Kraftfahrzeug sowie die zum Fahrsystem gehörende Benutzerschnittstelle zum Aktivieren der Fahrfunktion. Ferner betrifft die Erfindung ein Verfahren zum Aktvieren einer Fahrfunktion zum automatisierten Fahren aus der Mehrzahl verschiedener Fahrfunktionen.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren handelt es sich im Rahmen dieser Anmeldung typischerweise um ein zeitlich längeres Fahren mit einer gewissen Dauer, beispielsweise auf der Autobahn. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade entsprechen beispielsweise der Definition der Bundesanstalt für Straßenwesen (BASt) (siehe BASt-Publikation "Forschung kompakt", Ausgabe 11/2012). Beim assistierten Fahren führt der Fahrer die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum, wobei der Fahrer das System wie beim assistierten Fahren dauerhaft überwachen muss. Beim hochautomatisierten Fahren (HAF) übernimmt das System die Längs- und Querführung für einen gewissen Zeitraum (z. B. bei Fahrt auf der Autobahn), ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) dem Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Es sind Fahrsysteme bekannt, die eine Mehrzahl verschiedener Fahrfunktionen zum automatisieren Fahren mit unterschiedlichem Automatisierungsgrad unterstützten, beispielsweise ein Fahrfunktion zum hochautomatisierten Fahren mit Längs- und Querführung, eine Fahrfunktion zum teilautomatisierten Fahren mit Längs- und Querführung und ein oder mehrere Fahrfunktionen zum assistierten Fahren mit automatisierter Längsführung (z. B. eine Geschwindigkeitsregelungsfunktion, insbesondere eine auch als ACC (Adaptive Cruise Control) bezeichnete adaptive Geschwindigkeitsregelung) oder mit automatisierter Querführung (z. B. eine Spurführungsfunktion mit automatischer Spurführung ohne Lenkung durch den Fahrer).

Zum Aktivieren einer Fahrfunktion zum automatisierten Fahren ist es im Allgemeinen üblich, ein Bedienelement wie beispielsweise einen Taster zu betätigen. Wenn mehrere Fahrfunktionen zum automatisierten Fahren mit unterschiedlichem Automatisierungsgrad vorgesehen sind, können mehrere Bedienelemente zum Aktiveren der jeweils gewünschten Fahrfunktion (und ggf. auch zum Deaktivieren dieser Fahrfunktion) verwendet werden. Dies ist beispielsweise in der Druckschrift US 2015/0283998 A1 beschrieben.

Es sind Bedienkonzepte bekannt, bei denen der Automatisierungsgrad des automatisierten Fahrens durch ein oder zwei Bedienelemente zentral eingestellt werden kann.

Beispielsweise beschreibt die Druckschrift DE 10 2011 105 435 A1 eine Bedienvorrichtung, bei der der Automatisierungsgrad über einen ersten Taster erhöht und über einen zweiten Taster verringert werden kann. Mittels einer dazu separaten Kreuzwippe kann die Soll-Geschwindigkeit oder der Soll-Abstand zu einem vorausfahrenden Fahrzeug bei einer adaptiven Geschwindigkeitsregelung eingestellt werden. In der Druckschrift DE 10 2010 046 918 A1 ist eine Bedieneinrichtung beschrieben, wobei der Automatisierungsgrad über zwei Tasten oder alternativ über einen Schiebesteller eingestellt werden kann. Auch in der Druckschrift DE 10 2010 046 917 A1 ist die Einstellung des Automatisierungsgrads des Fahrerassistenzsystems über zwei Tasten beschrieben. Die Druckschrift DE 10 2012 016 774 A1 beschreibt eine Eingabevorrichtung für ein Kraftfahrzeug, bei der über einen Schiebesteller der Grad der Unterstützung von Fahrerassistenzsystemen zwischen "Deaktiviert", "Warnung" und "Eingriff" eingestellt werden kann. In der Druckschrift DE 103 34 587 A1 ist ferner ein Schiebesteller beschrieben, bei dem die Fahrerassistenz zwischen den Extremwerten "volle Assistenz" und "Eigenverantwortung" eingestellt werden kann. Ferner wird noch auf die Druckschrift DE 10 2010 063 792 A1 hingewiesen, in der mittels eines Schiebestellers die Intensität der Fahrerassistenz eingestellt werden, wobei mit Zunahme der Intensität eine oder mehrere Fahrerassistenzfunktionen aktiviert werden und mit Abnahme der Intensität eine oder mehrere Fahrerassistenzfunktionen deaktiviert werden.

Auch andere Eingabemodalitäten wie Sprache oder Gestik sind denkbar.

Es wird in Reaktion auf die Betätigung des jeweiligen Bedienelements versucht, die gewünschte Fahrfunktion zu aktivieren. Falls die Fahrfunktion nicht verfügbar ist, erfolgt im Allgemeinen eine Rückmeldung über deren Nichtverfügbarkeit (z. B. "automatisiertes Fahren aktuell nicht verfügbar"). Ferner ist es beispielsweise aus der US 2015/0283998 A1, der DE102013110864 A1 oder der DE 10 2007 029 594 A1 bekannt, die Verfügbarkeit einer Fahrfunktion zum automatisierten Fahren auch ohne Betätigung des Bedienelements dem Fahrer zu signalisieren, beispielsweise im Kombi-Instrument, im Head-up-Display (HUD) oder auf dem Bedienelement zum Aktivieren der Fahrfunktion selbst.

Bei einer Fahrfunktion zum automatisierten Fahren (z. B. bei einem Autobahnpilot zum hochautomatisierten Fahren auf einer Autobahn) handelt es sich häufig um eine Fahrzeugfunktion, die nicht immer verfügbar ist. Dies gilt insbesondere für eine Fahrfunktion zum hochautomatisierten Fahren oder zum teilautomatisierten Fahren. Die Verfügbarkeit einer Fahrfunktion zum automatisierten Fahren kann beispielsweise von der Fahrzeuggeschwindigkeit, dem Straßentyp, der Verkehrsdichte, dem Erkennen von Fahrspurmarkierungen (im Fall einer automatisierten Querführung) oder im Fall einer Fahrfunktion zum hoch- oder vollautomatisierten Fahren dem Vorliegen einer ausreichend schnellen Kommunikationsverbindung zu einem Backend-Server oder der Freigabe eines Streckenabschnitts zum hoch- bzw. vollautomatisierten Fahren abhängen. Die Verfügbarkeit der jeweiligen Fahrfunktion ist für den Nutzer nicht gut vorhersagbar.

Als Fahrer muss man wissen, zu welchem Zeitpunkt eine Fahrfunktion verfügbar ist, um diese Fahrfunktion dann mit dem zugehörigen Bedienelement zu aktivieren. Bei mehreren verschiedenen Fahrfunktionen mit unterschiedlichem Automatisierungsgrad muss der Fahrer neben der Überwachung der Verfügbarkeit der einzelnen Funktionen darüber hinaus entscheiden, welche Fahrfunktion in der aktuellen Fahrsituation gewünscht ist. Es ist für den Fahrer nicht immer einfach, das in der jeweiligen Fahrfunktion richtige Bedienelement der jeweiligen Fahrsituation zuzuordnen. Es muss neben der Belastung durch das Fahrgeschehen noch an die Aktivierung der in der jeweiligen Fahrsituation geeigneten Fahrfunktion gedacht werden.

Die Druckschrift DE 10 2012 101 686 A beschreibt ein Fahrerassistenzsystem, beispielsweise zur Geschwindigkeits-/Abstandsregelung, Spurhalteunterstützung und zur vollständig autonomen Fahrzeugführung. Es wird ermittelt, welche Regelungsaufgaben zur Längs- und/oder Querregelung aktuell an das Fahrerassistenzsystem übergeben werden können. Der Fahrer wird dann informiert, welche Regelungsaufgaben aktuell an das Fahrerassistenzsystem übergeben werden können. Beispielsweise kann der Fahrer dann im Fall einer möglichen Abstandsregelung durch Loslassen des Gaspedals die Geschwindigkeits-/Abstandsregelung aktivieren oder durch Loslassen des Lenkrads eine aktuell mögliche Spurhalteunterstützung aktivieren. Sofern der Fahrer Lenkrad und Fahrpedal loslässt, wird das Fahrzeug mit der Geschwindigkeits-/Abstandsregelung und der Spurhalteunterstützung längsals auch quergeführt. Zur Aktivierung einer aktuell möglichen vollständig autonomen Fahrzeugführung muss der Fahrer seine Aufmerksamkeit vom Verkehrsgeschehen abwenden.

Zum Stand der Technik wird ferner noch auf die Druckschrift WO 2016/109765 A verwiesen.

Es ist Aufgabe der Erfindung, ein Fahrsystem mit mehreren Fahrfunktionen mit unterschiedlichem Automatisierungsgrad anzugeben, welches den Fahrer bei der Wahl und Aktivierung der in der Fahrsituation geeigneten Fahrfunktion entlastet. Es ist ferner Aufgabe der Erfindung ein entsprechendes Verfahren zum Aktivieren einer Fahrfunktion bei einem Fahrsystem mit mehreren Fahrfunktionen mit unterschiedlichem Automatisierungsgrad anzugeben.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Fahrsystem mit einer Mehrzahl verschiedener Fahrfunktionen zum automatisierten Fahren mit unterschiedlichem Automatisierungsgrad für ein Kraftfahrzeug, beispielsweise für einen Personenkraftwagen. Vorzugsweise umfasst das Fahrsystem:
- eine Fahrfunktion zum hochautomatisierten Fahren,
- eine Fahrfunktion zum teilautomatisierten Fahren mit automatisierter Längs- und Querführung und
- eine Fahrfunktion zum assistierten Fahren mit lediglich automatisierter Längsführung (z. B. eine adaptive Geschwindigkeitsregelung) und/oder eine Fahrfunktion zum assistierten Fahren mit lediglich automatisierter Querführung (z. B. eine automatische Spurhaltefunktion).

Zumindest die Fahrfunktion mit dem höchsten Automatisierungsgrad (z. B. die Fahrfunktion zum hochautomatisierten Fahren) ist nicht ständig (d.h. nicht in jeder Fahrsituation) verfügbar. Auch die Verfügbarkeit der Fahrfunktionen mit dazu geringerem Automatisierungsgrad kann beschränkt sein. Da die Anforderungen an die Verfügbarkeitsbedingungen für die Verfügbarkeit mit steigendem Automatisierungsgrad im Allgemeinen zunehmen, sind vorzugsweise die ein oder mehreren Fahrfunktionen mit geringerem Automatisierungsgrad ohnehin verfügbar, wenn die Fahrfunktion mit einem dazu höherem Automatisierungsgrad verfügbar ist. Beispielsweise ist eine Fahrfunktion zum teilautomatisierten Fahren im Allgemeinen verfügbar, wenn die Fahrfunktion zum hochautomatisierten Fahren verfügbar ist.

Die Verfügbarkeit einer nicht ständig verfügbaren Fahrfunktion hängt typischerweise von der Fahrsituation ab, und kann beispielsweise von dem Erfüllen einer oder mehreren der folgenden Verfügbarkeitsbedingungen abhängen:
- das Fahrzeugumfeld betreffende Verfügbarkeitsbedingungen: beispielsweise das Vorliegen von Spurmarkierungen, das Vorliegen eines vorausfahrenden Fahrzeugs, Information eines Verkehrszeichens, die Freigabe eines vorausliegenden Autobahnabschnitts zum hochautomatisierten Fahren und
- den Fahrzeugzustand betreffende Verfügbarkeitsbedingungen: beispielsweise eine eigene Fahrzeuggeschwindigkeit kleiner oder kleiner gleich einer bestimmten Schwellgeschwindigkeit und/oder eine eigene Fahrzeuggeschwindigkeit größer oder größer gleich einer bestimmten anderen Schwellgeschwindigkeit.

Das Fahrsystem ist vorzugsweise eingerichtet, Fahrsituations-Information zu erfassen, die die aktuelle Fahrsituation betrifft. Diese Fahrsituations-Information dient dazu, über das Erfüllen der ein oder mehreren Verfügbarkeitsbedingungen für die jeweilige Fahrfunktion zu entscheiden. Die Fahrsituations-Information umfasst vorzugsweise eine oder mehrere der folgenden Fahrsituations-Informationsarten:
- mittels Umfeldsensorik erfasste Information,
- Information, die mittels den Fahrzeugzustand betreffender Sensorik ermittelt wurde, beispielsweise die eigene Fahrzeuggeschwindigkeit;
- per Funk empfangene Information, beispielsweise die per Funk empfangene Freigabe eines vorausliegenden Autobahnabschnitts zum hochautomatisierten Fahren;
- mittels eines Navigationssystems erfasste Information, z. B. Information über die aktuelle Fahrposition oder die vorausliegende Fahrstrecke.

Das Fahrsystem weist eine Benutzerschnittstelle zur Interaktion mit dem Fahrer auf. Die Benutzerschnittstelle umfasst eine für die Mehrzahl der Fahrfunktionen gemeinsame Eingabekompomente zum fahrerseitigen Signalisieren des fahrerseitigen, generellen Wunsches zum automatisierten Fahren an das Fahrsystem, indem eine Bedienhandlung über die Eingabekompomente durchgeführt wird. Hierbei handelt es sich vorzugsweise um ein vom Fahrer betätigbares gemeinsames Bedienelement, beispielsweise eine Taste (z. B. am Lenkrad angeordnet). Über die Eingabekomponente kann der grundsätzliche Wunsch nach Aktivierung der Automatisierung seitens des Fahrers an das Fahrsystem durch die Bedienhandlung ausgedrückt werden (d. h. der Wunsch nach Aktivierung irgendeiner der verschiedenen Fahrfunktionen). Die Bedienhandlung ist zur Aktivierung der verschiedenen Fahrfunktionen gleich und dient nicht der fahrerseitigen Auswahl einer bestimmten Fahrfunktion aus der Mehrzahl der Fahrfunktionen.

Bei Verwendung einer Bedientaste als gemeinsames Bedienelement kann es sich um einen mechanisch arbeitenden Taster oder um eine Sensortaste (z. B. eine virtuelle Taste auf einem Touchscreen) handeln.

Bei der gemeinsamen Eingabekomponente kann es sich (statt eines betätigbaren Bedienelements) auch um eine Spracheingabeeinrichtung handeln, über die der Fahrer dem System den Wunsch zum automatisierten Fahren signalisiert. Bei der Bedienhandlung handelt es sich dann um eine fahrerseitige Spracheingabe, die generell den Wunsch zum automatisierten Fahren signalisiert, ohne dass die Spracheingabe auf eine spezielle Fahrfunktion aus der Mehrzahl der Fahrfunktionen gerichtet ist. Die Spracheingabeeinrichtung nimmt ein Sprachsignal, insbesondere einen Sprachbefehl, des Fahrers entgegen und wertet dieses mittels Spracherkennung aus. Beispielsweise gibt der Fahrer den Sprachbefehl "Fahre automatisiert" oder "Bitte automatisiert fahren". Dies wird von der Spracheingabeeinrichtung so interpretiert, dass der Fahrer automatisiertes Fahren wünscht.

Statt über ein Bedienelement oder eine Spracheingabe könnte eine Eingabe per Geste vorgesehen sein, um den Wunsch zum automatisierten Fahren dem System zu signalisieren.

Das Fahrsystem ist eingerichtet, die über die Eingabekomponente durchgeführte Bedienhandlung festzustellen, beispielsweise eine fahrerzeitige Betätigung des gemeinsamen Bedienelements zum automatisierten Fahren festzustellen.

Nach Feststellen der Bedienhandlung (beispielsweise der Betätigung des gemeinsamen Bedienelements) wird beispielsweise unmittelbar im Anschluss oder auch erst später diejenige verfügbare Fahrfunktion aus der Mehrzahl der Fahrfunktionen bestimmt, die dann den höchstmöglichen Automatisierungsgrad aufweist.

Hierzu wird zumindest die Verfügbarkeit der Funktion mit dem höchsten Automatisierungsgrad vom Fahrsystem geprüft (beispielsweise nach Bedienhandlung (z. B. Betätigung des gemeinsamen Bedienelements) oder auch schon davor). Die Verfügbarkeit betrifft vorzugsweise die aktuelle Fahrsituation. Alternativ kann die Verfügbarkeit auch eine vorausliegende Fahrsituation betreffen, die beispielsweise innerhalb von wenigen Sekunden erreicht werden wird. Das System kann dem Fahrer dann beispielsweise bereits vorab die Fahrfunktion anbieten.

Sofern festgestellt wird, dass sogar die Fahrfunktion mit dem höchsten Automatisierungsgrad verfügbar ist, entspricht diese der von dem System bestimmten verfügbaren Fahrfunktion mit dem höchstmöglichen Automatisierungsgrad.

Sofern die Fahrfunktion mit dem höchstmöglichen Automatisierungsgrad nicht verfügbar ist, wird beispielsweise geprüft, ob eine zweite Fahrfunktion mit einem nächstgeringerem Automatisierungsgrad (z. B. teilautomatisiertes Fahren) verfügbar ist. Wenn diese zweite Fahrfunktion verfügbar ist, entspricht dieser der vom System bestimmten Fahrfunktion mit dem höchstmöglichen Automatisierungsgrad. Wenn auch diese zweite Fahrfunktion nicht verfügbar ist, wird beispielsweise geprüft, ob eine Fahrfunktion zum assistierten Fahren zur Verfügung steht (beispielsweise eine Fahrfunktion zum assistierten Fahren mit lediglich automatisierter Längsführung); bei deren Verfügbarkeit entspricht diese Fahrfunktion dann der Fahrfunktion mit dem höchstmöglichen Automatisierungsgrad. Es kann sein, dass eine Fahrfunktion zum assistierten Fahren (z. B. ACC) immer zur Verfügung steht.

Sofern die Fahrfunktion bestimmt worden ist, die unter den verfügbaren Fahrfunktionen den höchstmöglichen Automatisierungsgrad aufweist, kann diese aktiviert werden. Die bestimmte verfügbare Fahrfunktion mit dem höchstmöglichen Automatisierungsgrad (beispielsweise in der aktuellen Fahrsituation hochautomatisiertes Fahren) wird automatisch ohne weitere Bedienhandlung durch den Fahrer vom System aktiviert.

Das erfindungsgemäße Fahrsystem bietet den Vorteil, dass der Fahrer bei der Wahl und Aktivierung der in der Fahrsituation verfügbaren Fahrfunktion entlastet wird, da das System selbst die Fahrfunktion mit dem höchstmöglichen Automatisierungsgrad unten den ein oder mehreren in der Fahrsituation verfügbaren Fahrfunktionen anbietet. Das Konzept ermöglicht ferner eine Reduzierung der Anzahl von Bedienelementen. Das ist kostengünstig und einfacher bedienbar.

Der Zustand vor der Aktivierung der vom System bestimmten verfügbaren Fahrfunktion mit dem höchstmöglichen Automatisierungsgrad kann ein Zustand sein, in dem noch keine Fahrfunktion aus der Mehrzahl der Fahrfunktionen aktiv ist.

Es ist aber auch denkbar, dass nach der über die gemeinsame Eingabekomponente durchgeführte Bedienhandlung (z. B. nach Betätigung des gemeinsamen Bedienelements) zunächst eine Fahrfunktion mit einem niedrigeren Automatisierungsgrad bereits aktiviert wird (wobei eine Fahrfunktion mit höherem Automatisierungsgrad zum Zeitpunkt der Aktivierung noch nicht verfügbar ist). In dem Zustand mit aktiver Fahrfunktion mit niedrigerem Automatisierungsgrad kann dann später festgestellt werden, dass eine Fahrfunktion mit einem dazu höheren Automatisierungsgrad verfügbar ist, insbesondere die Fahrfunktion mit dem höchsten Automatisierungsgrad (beispielsweise hochautomatisiertes Fahren bei bereits aktivem teilautomatisierten Fahren).

Das Fahrsystem könnte eingerichtet sein, bei späterem Feststellen, dass die Fahrfunktion mit dem höheren Automatisierungsgrad verfügbar ist, die Fahrfunktion mit höherem Automatisierungsgrad direkt zu aktivieren, ohne dass es eine weiteren Bedienhandlung des Fahrers hierfür bedarf.

Es ist aber von Vorteil, wenn stattdessen bei festgestellter Verfügbarkeit der Fahrfunktion mit dem höheren Automatisierungsgrad über die Ausgabekomponente die Fahrfunktion mit dem höheren Automatisierungsgrad dem Fahrer zunächst angeboten wird. Der Fahrer kann dann die angebotene Fahrfunktion mit einem höheren Automatisierungsgrad über die Annahmekomponente bestätigen, insbesondere über die Betätigung einer Bedientaste. Das Fahrsystem wechselt dann von der Fahrfunktion mit dem niedrigen Automatisierungsgrad auf die Fahrfunktion mit dem höheren Automatisierungsgrad.

Sofern es sich bei der gemeinsamen Eingabekomponente um ein gemeinsames Bedienelement handelt, ist vorzugsweise eine Leuchtanzeige in dem gemeinsamen Bedienelement integriert oder dem gemeinsamen Bedienelement zugeordnet (insbesondere durch eine räumliche Nähe, z. B. direkt neben dem Bedienelement im Cockpit angeordnet). Bei der Leuchtanzeige handelt es sich beispielsweise um die Suchbeleuchtung des gemeinsamen Bedienelements, insbesondere um die Suchbeleuchtung einer als gemeinsames Bedienelement dienenden Bedientaste. Das Fahrsystem ist eingerichtet, über den Leuchtzustand der Leuchtanzeige dem Fahrer die Verfügbarkeit zumindest einer der Fahrfunktionen zu signalisieren, zumindest insbesondere die Verfügbarkeit der Fahrfunktion mit dem höchsten Automatisierungsgrad. Wenn beispielsweise die Fahrfunktion zum hochautomatisierten Fahren verfügbar ist, leuchtet die Leuchtanzeige (insbesondere die gemeinsame Bedientaste) beispielsweise in einer definierten Leuchtfarbe (z. B. blau). Ansonsten leuchtet beispielsweise die die Leuchtanzeige überhaupt nicht oder bei geringerem Umgebungslicht in einer anderen Leuchtfarbe (beispielsweise in einer neutralen Leuchtfarbe, z. B. weiß).

Es können verschiedene Leuchtzustände für die Leuchtanzeige vorgesehen sein (beispielsweise verschiedene Leuchtfarben), um die Verfügbarkeit einer jeweiligen Fahrfunktion für verschiedene Fahrfunktionen dazustellen. Beispielsweise leuchtet die Leuchtanzeige blau, wenn hochautomatisiertes Fahren verfügbar ist, wohingegen die Leuchtanzeige grün leuchtet, wenn nur teilautomatisiertes Fahren verfügbar ist (und hochautomatisiertes Fahren nicht verfügbar ist).

Darüber hinaus kann für das gemeinsame Bedienelement eine Funktionsbeleuchtung vorgesehen sein, die beispielsweise neben dem Bedienelement angeordnet ist. Bei Betätigen des gemeinsamen Bedienelements schaltet die Funktionsbeleuchtung in einen definierten ersten Leuchtzustand um (z. B. auf die Farbe Blau), um dem Fahrer zu signalisieren, dass die diesem Leuchtzustand zugeordnete Fahrfunktion (z. B. hochautomatisiertes Fahren im Fall der Farbe Blau) aktiviert wird. Beispielsweise ist die Fahrfunktion mit dem höchsten Automatisierungsgrad dem ersten Leuchtzustand zugeordnet. Wenn diese zugeordnete Fahrfunktion nach Betätigen des gemeinsamen Bedienelements nicht aktiviert wird, weil diese nicht verfügbar ist, schaltet die Funktionsbeleuchtung nach Betätigen vorzugsweise in einen zweiten Leuchtzustand (z. B. grün).

Wenn die Fahrfunktion mit dem höchsten Automatisierungsgrad verfügbar ist, leuchtet die Suchbeleuchtung beispielsweise in der gleichen Farbe (z. B. blau), in der die Funktionsbeleuchtung leuchtet, wenn das Bedienelement betätigt wurde und die Fahrfunktion mit dem höchsten Automatisierungsgrad verfügbar ist.

Wenn der Fahrer keine Automatisierung mehr wünscht, betätigt er das gemeinsame Bedienelement. In Reaktion hierauf wird vorzugsweise automatisches Fahren unterbunden. Sofern beim erneuten Betätigen beispielsweise bereits eine der Fahrfunktionen zum automatisierten Fahren aktiv war, wird diese Fahrfunktion deaktiviert und das Fahrzeug in einen manuellen Fahrbetrieb überführt. Sofern beim erneuten Betätigen noch keine der Fahrfunktionen zum automatisierten Fahren aktiv war, wird keine Fahrfunktion mehr automatisch aktiviert.

Ein zweiter Aspekt der Erfindung betrifft ein Verfahren zum Aktivieren einer Fahrfunktion zum automatisierten Fahren. Ein Fahrsystem umfasst eine Mehrzahl verschiedener Fahrfunktionen zum automatisierten Fahren mit unterschiedlichem Automatisierungsgrad. Das Verfahren weist die folgenden Schritte auf:
- Feststellen einer fahrerzeitigen Bedienhandlung einer für die Mehrzahl der Fahrfunktionen gemeinsamen Eingabekompomente zum Signalisieren des fahrerseitigen Wunsches zum automatisierten Fahren (insbesondere Feststellen einer fahrerseitigen Betätigung eines gemeinsamen Bedienelements);
- nach Feststellen der Bedienhandlung, Bestimmen derjenigen verfügbaren Fahrfunktion aus der Mehrzahl der Fahrfunktionen, die den höchstmöglichen Automatisierungsgrad aufweist; und
- automatisches Aktivieren der bestimmten verfügbaren Fahrfunktion mit dem höchstmöglichen Automatisierungsgrad ohne weitere Bedienhandlung durch den Fahrer.

Die vorstehenden Ausführungen zum erfindungsgemäßen Fahrsystem nach dem ersten Aspekt der Erfindung gelten in entsprechender Weise auch für das erfindungsgemäße Verfahren nach dem zweiten Aspekt der Erfindung. An dieser Stelle und in den Patentansprüchen nicht explizit beschriebene vorteilhafte Ausführungsbeispiele des erfindungsgemäßen Verfahrens entsprechen den vorstehend beschriebenen oder in den Patentansprüchen beschriebenen vorteilhaften Ausführungsbeispielen des erfindungsgemäßen Fahrsystems.

Die Erfindung wird nachfolgend anhand mehrerer Ausführungsbeispiele unter Zuhilfenahme der beigefügten Zeichnungen beschrieben. In diesen zeigen:
- Fig. 1: eine beispielhafte Benutzerschnittstelle; und
- Fig. 2: ein Ausführungsbeispiel zur Aktivierung von Fahrfunktionen zum automatisierten Fahren.

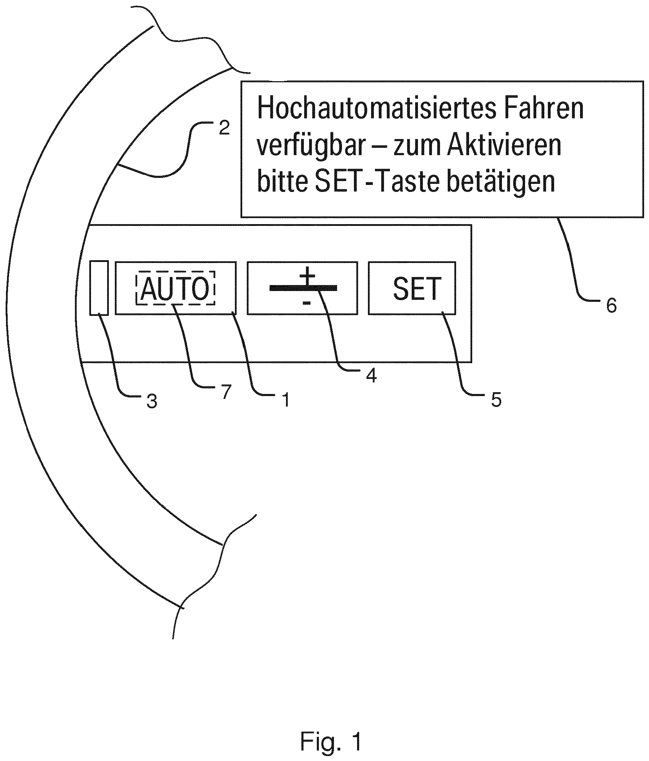

In Fig. 1 sind Komponenten eines Ausführungsbeispiels einer Benutzerschnittstelle für ein beispielhaftes erfindungsgemäßes Fahrsystem schematisch dargestellt. Das erfindungsgemäße Fahrsystem umfasst (mit abnehmendem Automatisierungsgrad) eine Fahrfunktion zum hochautomatisierten Fahren (HAF) mit automatisierter Längs- und Querführung (insbesondere für den Einsatz auf einer Autobahn), eine Fahrfunktion (TAF) zum teilautomatisierten Fahren mit automatisierter Längs- und Querführung sowie eine Fahrfunktion (AF) zum assistierten Fahren mit nur automatisierter Längsführung. Optional könnte auch eine Fahrfunktion zum assistierten Fahren mit nur automatisierter Querführung vorgesehen sein.

Die Benutzerschnittstelle umfasst ein Bedienelement 1 ("AUTO") zum Signalisieren des Wunsches zum automatisierten Fahren an das Fahrsystem. Das Bedienelement 1 ("AUTO") ist beispielsweise als Bedientaste implementiert und vorzugsweise in einem Lenkrad 2 integriert, wobei in Fig. 1 ein Ausschnitt des Lenkradkranzes des Lenkrads 2 dargestellt ist. Neben dem gemeinsamen Bedienelement 1 ("AUTO") ist eine als Funktionsbeleuchtung verwendete Leuchtanzeige 3 angeordnet, die nach Betätigung des Bedienelements 1 ("AUTO") grundsätzlich in einer ersten Leuchtfarbe (z. B. grün) leuchtet, jedoch im Fall der Verfügbarkeit des hochautomatisierten Fahrens nach Betätigung des Bedienelements 1 ("AUTO") in einer zweiten Leuchtfarbe (z. B. blau) leuchtet.

Vorzugsweise ist eine Suchbeleuchtung 7 in dem Bedienelement 1 integriert, die beispielsweise die Beschriftung des Bedienelements (hier "AUTO") in einer bestimmten Leuchtfarbe leuchten lässt. Über den Leuchtzustand der Suchbeleuchtung 7 kann dem Fahrer die Verfügbarkeit der Fahrfunktion HAF zum hochautomatisierten Fahren mitgeteilt werden. Wenn die Fahrfunktion HAF verfügbar ist, leuchtet die Suchbeleuchtung beispielsweise in der gleichen Farbe (hier blau), in der die Funktionsbeleuchtung 3 leuchtet, wenn das Bedienelement 1 betätigt wurde und die Fahrfunktion HAF verfügbar ist. Ansonsten leuchtet beispielsweise die Suchbeleuchtung 7 überhaupt nicht oder bei geringerem Umgebungslicht in einer neutralen Leuchtfarbe (z. B. weiß).

Ferner ist eine in zwei entgegen gesetzte Richtungen wippbare Wippe 4 vorgesehen, die beispielsweise zur Änderung einer vorgegebenen Fahrgeschwindigkeit beim assistierten oder teilautomatisierten Fahren dient.

Über ein Bedienelement 5 ("SET"), z. B. eine Taste, kann der Fahrer eine angebotene Fahrfunktion zum automatisierten Fahren annehmen.

Darüber hinaus ist eine Anzeige 6, beispielsweise in der Instrumentenkombination oder im Head-Up-Display, vorgesehen, über den eine Fahrfunktion zum automatisierten Fahren dem Fahrer angeboten werden kann.

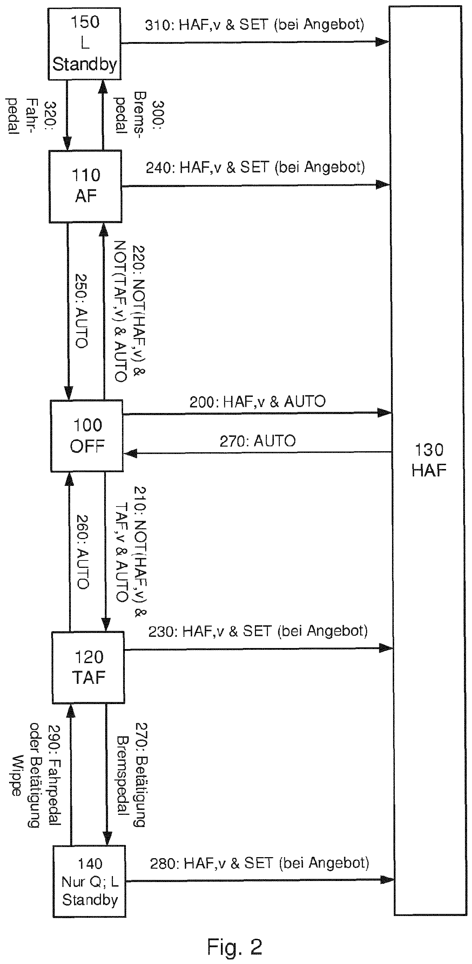

In Fig. 2 ist eine beispielhafte Funktionsweise zur Aktivierung von Fahrfunktionen zum automatisierten Fahren basierend auf der vorstehend Benutzerschnittstelle dargestellt.

Das Fahrsystem kann sich in einem Zustand aus einer Mehrzahl von Zuständen befinden, nämlich beispielsweise in dem Zustand 100 ohne automatisiertes Fahren, in dem Zustand 110 mit aktivierter Fahrfunktion AF zum assistierten Fahren mit lediglich automatisierter Längsführung, in einem Zustand 120 mit aktivierter Fahrfunktion TAF zum teilautomatisierten Fahren mit automatisierter Längs- und Querführung und in einem Zustand 130 mit aktivierter Fahrfunktion HAF zum hochautomatisierten Fahren mit automatisierter Längs- und Querführung.

Ausgehend von dem Zustand 100 ohne automatisiertes Fahren wird in Reaktion auf eine Betätigung des Bedienelements 1 ("AUTO") im Fall der Verfügbarkeit der Fahrfunktion HAF ("HAF,v") die Fahrfunktion HAF aktiviert und damit der Zustand 130 eingenommen (s. Zustandsübergang 200). Sofern nicht die Fahrfunktion HAF ("NOT(HAF,v)") verfügbar ist (beispielsweise weil die aktuelle Fahrgeschwindigkeit zu hoch ist), jedoch die Fahrfunktion TAF verfügbar ist ("TAF,v"), wird in Reaktion auf eine Betätigung des gemeinsamen Bedienelements 1 ("AUTO") die Fahrfunktion TAF zum teilautomatisierten Fahren aktiviert und damit der Zustand 120 eingenommen (s. Zustandsübergang 210). Sofern weder die Fahrfunktion HAF verfügbar ist ("NOT(HAF,v)"), noch die Fahrfunktion TAF verfügbar ist ("NOT(TAF,v)") (beispielsweise weil das Fahrzeug manuell aktuell nicht ausreichend mittig in der Fahrspur geführt wird), wird in Reaktion auf eine Betätigung des Bedienelements 1 ("AUTO") die Fahrfunktion AF zum assistierten Fahren aktiviert und damit der Zustand 110 eingenommen (s. Zustandsübergang 220).

Es wird also diejenige verfügbare Fahrfunktion aus den Fahrfunktionen AF, TAF und HAF bestimmt, die zu diesem Zeitpunkt unten den verfügbaren Funktionen den höchstmöglichen Automatisierungsgrad aufweist und diese verfügbare Fahrfunktion wird dann vom System aktiviert. Bei diesem Ausführungsbeispiel wird davon ausgegangen, dass ausgehend von dem Zustand 100 die verfügbare Fahrfunktion mit dem aktuell höchstmöglichen Automatisierungsgrad vom System automatisch aktiviert wird (bei vorher aktiviertem Bedienelement 1), ohne dass der Fahrer eine weitere Bedienhandlung vornehmen muss.

Sofern nach Betätigen des Bedienelements 1 ("AUTO") bei Nichtverfügbarkeit der Fahrfunktion HAF das Fahrsystem den Zustand 120 eingekommen hat und die Fahrfunktion TAF zum teilautomatisierten Fahren aktiv ist, kann sich später die Situation ergeben, dass festgestellt wird, dass die Fahrfunktion HAF nun doch verfügbar ist ("HAF,v"). In diesem Fall wird der Fahrer über die Anzeige 6 darauf hingewiesen, dass die Fahrfunktion HAF verfügbar ist, und dem Fahrer die Aktivierung der Fahrfunktion angeboten (s. Fig. 1 "Hochautomatisiertes Fahren verfügbar"). Dem Fahrer wird auf der Anzeige 6 mitgeteilt, durch welche Bedienhandlung der Fahrer die Fahrfunktion HAF aktivieren kann. Beispielsweise kann die angebotene Fahrfunktion HAF durch Betätigung des Bedienelements 5 ("SET") fahrerseitig angenommen werden, so dass in Reaktion auf die Betätigung des Bedienelements 5 ("SET") die Fahrfunktion HAF aktiviert wird. Ausgehend von dem Zustand 120 mit aktiver Fahrfunktion TAF wird im Fall der Verfügbarkeit der Fahrfunktion HAF ("HAF,v") die Fahrfunktion HAF angeboten und im Fall der Annahme des Angebots durch Betätigung des Bedienelements 5 ("SET") die Fahrfunktion HAF aktiviert (s. Zustandsübergang 230).

Sofern hingegen bei Nichtverfügbarkeit der Fahrfunktion HAF und Nichtverfügbarkeit der Fahrfunktion TAF das Fahrsystem den Zustand 110 eingekommen hat und die Fahrfunktion AF zum assistierten Fahren aktiv ist, kann sich später die Situation ergeben, dass festgestellt werden, dass die Fahrfunktion HAF nun doch verfügbar ist ("HAF,v"). Ausgehend von dem Zustand 110 mit aktiver Fahrfunktion AF wird im Fall der Verfügbarkeit der Fahrfunktion HAF ("HAF,v") dann in ähnlicher Weise die Fahrfunktion HAF angeboten und im Fall der Annahme des Angebots durch Betätigung des Bedienelements 5 ("SET") die Fahrfunktion HAF aktiviert (s. Zustandsübergang 240).

Ferner ist ein weiterer Zustand 140 vorgesehen, in den das Fahrsystem ausgehend von dem Zustand 120 wechselt, wenn der Fahrer im Zustand 120 beim teilautomatisierten Fahren das Bremspedal betätigt (s. Zustandsübergang 270). Im Zustand 140 wird die automatisierte Querführung der Fahrfunktion TAF fortgesetzt, wohingegen die automatisierte Längsführung der Fahrfunktion im Standby-Betrieb ist, d. h. aktuell nicht aktiv ist, so dass der Fahrer die Längsführung manuell durchführt. Sofern im Zustand 140 die Fahrfunktion HAF verfügbar wird ("HAF,v"), wird diese Fahrfunktion HAF dem Fahrer angeboten und im Fall der Annahme des Angebots durch Betätigung des Bedienelements 5 ("SET") aktiviert (s. Zustandsübergang 280).

Sofern der Fahrer im Zustand 140 das Fahrpedal betätigt, wird der Fahrer über die Anzeige 6 dazu aufgefordert, das Fahrpedal loszulassen. Nach Loslassen des Fahrpedals wechselt das System wieder in den Zustand 120. Außerdem kann der Fahrer durch Betätigung der Wippe 4 in den Zustand 120 zurückwechseln. Hierbei wird je nach Betätigungsart der Wippe eine frühere Setzgeschwindigkeit als Setzgeschwindigkeit oder die aktuelle Fahrzeuggeschwindigkeit als Setzgeschwindigkeit verwendet.

Ferner kann ein weiterer Zustand 150 vorgesehen sein, in das das Fahrsystem ausgehend von dem Zustand 110 wechselt, wenn der Fahrer im Zustand 110 das Bremspedal betätigt (s. Zustandsübergang 300). Im Zustand 150 befindet sich die Längsführung im Standby-Betrieb ist. Sofern im Zustand 150 die Fahrfunktion HAF verfügbar wird ("HAF,v"), wird diese Fahrfunktion HAF dem Fahrer angeboten und im Fall der Annahme des Angebots durch Betätigung des Bedienelements 5 ("SET") aktiviert (s. Zustandsübergang 310).

Wenn der Fahrer bei aktiver Automatisierung im Zustand 110, 120 oder 130 keine weitere Automatisierung mehr wünscht, kann der Fahrer das Bedienelement 1 betätigen, so dass das Fahrsystem wieder den Zustand 100 ohne Automatisierung einnimmt (s. Zustandsübergänge 250, 260, 270).

## Patentansprüche

1. Fahrsystem mit einer Mehrzahl verschiedener Fahrfunktionen zum automatisierten Fahren mit unterschiedlichem Automatisierungsgrad für ein Kraftfahrzeug, wobei zumindest die Funktion mit dem höchsten Automatisierungsgrad nicht ständig verfügbar ist, das Fahrsystem eine Benutzerschnittstelle aufweist, die umfasst:
- ein für die Mehrzahl der Fahrfunktionen gemeinsame Eingabekomponente (1) zum fahrerseitigen Signalisieren des fahrerseitigen Wunsches zum automatisierten Fahren an das Fahrsystem durch eine Bedienhandlung über die Eingabekomponente, und
das Fahrsystem eingerichtet ist,
- die fahrerzeitige Bedienhandlung über die gemeinsame Eingabekomponente (1) festzustellen,
**dadurch gekennzeichnet, dass**
das Fahrsystem ferner eingerichtet ist,
- nach Feststellen der Bedienhandlung über die gemeinsame Eingabekomponente (1), diejenige verfügbare Fahrfunktion aus der Mehrzahl der Fahrfunktionen zu bestimmen, die den höchstmöglichen Automatisierungsgrad aufweist, und
- die bestimmte verfügbare Fahrfunktion mit dem höchstmöglichen Automatisierungsgrad automatisch ohne weitere Bedienhandlung durch den Fahrer zu aktivieren.

2. Fahrsystem nach Anspruch 1, wobei
- die gemeinsame Eingabekomponente ein betätigbares gemeinsames Bedienelement (1) ist, und
- die Bedienhandlung ein Betätigen des gemeinsamen Bedienelements ist.

3. Fahrsystem nach einem der vorhergehenden Ansprüche, wobei die Mehrzahl der Fahrfunktionen umfasst:
- eine Fahrfunktion zum hochautomatisierten Fahren,
- eine Fahrfunktion zum teilautomatisieren Fahren und
- eine Fahrfunktion zum assistierten Fahren.

4. Fahrsystem nach einem der vorhergehenden Ansprüche, wobei
- die gemeinsame Eingabekomponente ein betätigbares gemeinsames Bedienelement (1) ist,
- dem gemeinsamen Bedienelement (1) eine erste Leuchtanzeige (7) zugeordnet ist, insbesondere integriert in dem gemeinsamen Bedienelement (1), und
- das Fahrsystem eingerichtet ist, über den Leuchtzustand der ersten Leuchtanzeige (7) dem Fahrer die Verfügbarkeit zumindest einer der Fahrfunktionen zu signalisieren, zumindest insbesondere die Verfügbarkeit der Fahrfunktion mit dem höchsten Automatisierungsgrad.

5. Fahrsystem nach einem der vorhergehenden Ansprüche, wobei
- die gemeinsame Eingabekomponente ein betätigbares gemeinsames Bedienelement (1) ist,
- dem gemeinsamen Bedienmittel in Form eines Bedienelements (1) eine zweite Leuchtanzeige (3) zugeordnet ist, insbesondere eine neben dem gemeinsamen Bedienelement angeordnete Leuchtanzeige (3), und
- das Fahrsystem eingerichtet ist, bei Betätigen des gemeinsamen Bedienelements (1) die zweite Leuchtanzeige (3) in einen definierten ersten Leuchtzustand umzuschalten, um dem Fahrer die Aktivierung der Fahrfunktion mit dem höchsten Automatisierungsgrad zu signalisieren, sofern die Fahrfunktion mit dem höchsten Automatisierungsgrad verfügbar ist.

6. Fahrsystem nach einem der vorhergehenden Ansprüche, wobei
- die gemeinsame Eingabekomponente ein betätigbares gemeinsames Bedienelement (1) ist, und
- das Fahrsystem eingerichtet ist, bei erneutem Betätigen des gemeinsamen Bedienelements (1) automatisiertes Fahren zu unterbinden.

7. Verfahren zum Aktivieren einer Fahrfunktion zum automatisierten Fahren für ein Fahrzeug mit einem Fahrsystem mit einer Mehrzahl verschiedener Fahrfunktionen zum automatisierten Fahren mit unterschiedlichem Automatisierungsgrad, wobei zumindest die Funktion mit dem höchsten Automatisierungsgrad nicht ständig verfügbar ist, mit dem Schritt:
- Feststellen einer fahrerseitigen Bedienhandlung über eine für die Mehrzahl der Fahrfunktionen gemeinsame Eingabekomponente (1) zum Signalisieren des fahrerseitigen Wunsches zum automatisierten Fahren;
**dadurch gekennzeichnet, dass**
das Verfahren ferner die Schritte umfasst:
- nach Feststellen der Bedienhandlung, Bestimmen derjenigen verfügbaren Fahrfunktion aus der Mehrzahl der Fahrfunktionen, die den höchstmöglichen Automatisierungsgrad aufweist; und
- automatisches Aktivieren der bestimmten verfügbaren Fahrfunktion mit dem höchstmöglichen Automatisierungsgrad ohne weitere Bedienhandlung durch den Fahrer.

## Claims

1. Driving system having a plurality of different driving functions for automated driving with a different degree of automation for a motor vehicle, wherein at least the function with the highest degree of automation is not constantly available, the driving system has a user interface comprising:
- an input component (1) which is common to the plurality of driving functions and is intended to signal, by the driver, the driver's desire for automated driving to the driving system by means of an operating action via the input component, and
the driving system is configured
- to determine the driver's operating action via the common input component (1),
**characterized in that**
the driving system is also configured
- after the operating action via the common input component (1) has been determined, to determine that available driving function from the plurality of driving functions which has the highest possible degree of automation, and
- to activate the determined available driving function with the highest possible degree of automation automatically without a further operating action by the driver.

2. Driving system according to Claim 1, wherein
- the common input component is an actuatable common operating element (1), and
- the operating action is actuation of the common operating element.

3. Driving system according to one of the preceding claims, wherein the plurality of driving functions comprise:
- a driving function for highly automated driving,
- a driving function for partially automated driving, and
- a driving function for assisted driving.

4. Driving system according to one of the preceding claims, wherein
- the common input component is an actuatable common operating element (1),
- a first light-emitting display (7), in particular integrated in the common operating element (1), is assigned to the common operating element (1), and
- the driving system is configured to signal the availability of at least one of the driving functions, at least in particular the availability of the driving function with the highest degree of automation, to the driver via the light-emitting state of the first light-emitting display (7).

5. Driving system according to one of the preceding claims, wherein
- the common input component is an actuatable common operating element (1),
- a second light-emitting display (3), in particular a light-emitting display (3) arranged beside the common operating element, is assigned to the common operating means in the form of an operating element (1), and
- the driving system is configured to change over the second light-emitting display (3) to a defined first light-emitting state upon actuation of the common operating element (1) in order to signal the activation of the driving function with the highest degree of automation to the driver if the driving function with the highest degree of automation is available.

6. Driving system according to one of the preceding claims, wherein
- the common input component is an actuatable common operating element (1), and
- the driving system is configured to prevent automated driving if the common operating element (1) is actuated again.

7. Method for activating a driving function for automated driving for a vehicle with a driving system having a plurality of different driving functions for automated driving with a different degree of automation, wherein at least the function with the highest degree of automation is not constantly available, having the step of:
- determining a driver's operating action via an input component (1) which is common to the plurality of driving functions and is intended to signal the driver's desire for automated driving;
**characterized in that**
the method also comprises the steps of:
- after the operating action has been determined, determining that available driving function from the plurality of driving functions which has the highest possible degree of automation; and
- activating the determined available driving function with the highest possible degree of automation automatically without a further operating action by the driver.

## Revendications

1. Système de conduite pourvu d'une pluralité de fonctions de conduite différentes servant à la conduite automatisée avec un degré d'automatisation différent pour un véhicule automobile, dans lequel au moins la fonction ayant le plus haut degré d'automatisation n'est pas disponible en permanence, le système de conduite présentant une interface utilisateur comprenant :
- un composant de saisie (1) commun à la pluralité de fonctions de conduite permettant au conducteur de signaler au système de conduite son désir de passer à la conduite automatisée par une intervention par l'intermédiaire du composant de saisie, et
le système de conduite est conçu pour
- constater l'intervention du conducteur par l'intermédiaire du composant de saisie (1) commun,
**caractérisé en ce que** le système de conduite est en outre conçu pour
- après constatation de l'intervention, déterminer la fonction de conduite disponible parmi la pluralité des fonctions de conduite qui présente le degré d'automatisation le plus élevé possible ; et
- activer automatiquement la fonction de conduite disponible déterminée ayant le degré d'automatisation le plus élevé possible sans autre intervention de la part du conducteur.

2. Système de conduite selon la revendication 1, dans lequel
- le composant de saisie commun est un élément de commande commun (1) pouvant être actionné, et
- l'intervention est un actionnement de l'élément de commande commun.

3. Système de conduite selon l'une quelconque des revendications précédentes, dans lequel la pluralité des fonctions de conduite comprend :
- une fonction de conduite pour une conduite hautement automatisée,
- une fonction de conduite pour une conduite semi-automatisée, et
- une fonction de conduite pour une conduite assistée.

4. Système de conduite selon l'une quelconque des revendications précédentes, dans lequel
- le composant de saisie commun est un élément de commande commun (1) pouvant être actionné,
- un premier affichage lumineux (7) est associé à l'élément de commande commun (1), en étant en particulier intégré dans l'élément de commande commun (1), et
- le système de conduite est conçu pour signaler au conducteur, par l'intermédiaire de l'état d'éclairage du premier affichage lumineux (7), la disponibilité d'au moins l'une des fonctions de conduite, au moins en particulier la disponibilité de la fonction de conduite ayant le plus haut degré d'automatisation.

5. Système de conduite selon l'une quelconque des revendications précédentes, dans lequel
- le composant de saisie commun est un élément de commande commun (1) pouvant être actionné,
- un deuxième affichage lumineux (3) est associé au moyen de commande commun sous la forme d'un élément de commande (1), en particulier un affichage lumineux (3) disposé à côté de l'élément de commande commun, et
- le système de conduite est conçu, en cas d'actionnement de l'élément de commande commun (1), pour commuter le deuxième affichage lumineux (3) sur un premier état d'éclairage défini afin de signaler au conducteur l'activation de la fonction de conduite ayant le plus haut degré d'automatisation dans la mesure où la fonction de conduite ayant le plus haut degré d'automatisation est disponible.

6. Système de conduite selon l'une quelconque des revendications précédentes, dans lequel
- le composant de saisie commun est un élément de commande commun (1) pouvant être actionné, et
- le système de conduite est conçu pour interdire la conduite automatisée en cas d'actionnement renouvelé de l'élément de commande commun (1).

7. Procédé permettant d'activer une fonction de conduite servant à la conduite automatisée pour un véhicule comprenant un système de conduite ayant une pluralité de fonctions de conduite différentes servant à la conduite automatisée avec un degrés d'automatisation différent, dans lequel au moins la fonction ayant le plus haut degré d'automatisation n'est pas disponible en permanence, comprenant l'étape consistant à :
- constater une intervention de la part du conducteur par l'intermédiaire d'un composant de saisie (1) commun à la pluralité des fonctions de conduite pour signaler le désir du conducteur de passer à la conduite automatisée ;
**caractérisé en ce que** le procédé comprend en outre les étapes consistant à :
- après constatation de l'intervention, déterminer la fonction de conduite disponible parmi la pluralité des fonctions de conduite qui présente le degré d'automatisation le plus élevé possible ; et
- activer automatiquement la fonction de conduite disponible déterminée ayant le degré d'automatisation le plus élevé possible sans autre intervention de la part du conducteur.
